# EUROPEAN PATENT APPLICATION

(11) **EP 2 816 568 A1**
(43) Date of publication of application: **24.12.2014**
(21) Application number: 12868407.3
(22) Date of filing: 17.02.2012
(51) Int. Cl.: H01B 3/40, C08K 3/36, C08L 53/02

(54) **RESIN COMPOSITION FOR ELECTRIC INSULATION, CURED PRODUCT THEREOF, METHODS FOR MANUFACTURING SAME, AND HIGH-VOLTAGE DEVICES AND ELECTRIC POWER TRANSMISSION AND DISTRIBUTION DEVICES USING SAME**

(71) Applicant: Hitachi, Ltd., Tokyo 100-8280 (JP)
(72) Inventor: MATSUMOTO Hironori, Tokyo 100-8280 (JP); OHTAKE Atsushi, Tokyo 100-8280 (JP); SANO Akihiro, Tokyo 100-8280 (JP)
(74) Representative: Beetz & Partner
(86) International application number: PCT/JP2012/053739
(87) International publication number: WO 2013/121571

(57) **Abstract**

The present invention is aimed at enhancing dispersibility of filler, maintaining uniform low-thermal-expansion properties and mechanical strength, enhancing insulation characteristics, especially treeing resistivity, of a resin composition or a cured resin product, and enhancing the reliability of a high voltage apparatus, a power transmission and distribution apparatus or the like to which the resin composition or the cured resin product is applied.

An insulating resin composition contains an insulating resin 1 as a matrix, a large particle diameter filler 2, and a small particle diameter filler 3 smaller in particle diameter than the large particle diameter filler 2, the large particle diameter filler 2 and the small particle diameter filler 3 being dispersed in the insulating resin 1, wherein the insulating resin 1 and the large particle diameter filler 2 has an affinity for each other, whereas the insulating resin 1 and the small particle diameter filler 3 have no affinity for each other.

## Description

### Technical Field

The present invention relates to an electrical insulation resin composition, a cured product of the same, methods of preparing the composition and the product, and high voltage apparatuses and power transmission and distribution apparatuses using the composition and the product.

### Background Art

Insulating resins are widely used as insulating material for application to high voltage apparatuses such as motors, inverters, etc. and power transmission and distribution apparatuses such as transformers, circuit breakers, etc. Particularly, engineering plastics, development of which has been advanced starting from the 1970s, have come to find a widened range of application because they are superior to conventional resins in insulation properties, mechanical properties, heat resistance and weatherability.

Meanwhile, insulating resins when used singly show high coefficients of thermal expansion, as compared with metallic materials. In view of this, inorganic fillers having extremely low coefficients of thermal expansion and having insulating properties such as silica, alumina, etc. are added in large amounts to the insulating resins for the purpose of lowering the coefficient of thermal expansion of the insulating resins and, further, from the viewpoint of realizing a lower cost and an enhanced mechanical strength. However, the recent further miniaturization of apparatuses has led to a tendency toward a higher thermal stress applied to the insulating resins than before. As a result, there have arisen the problem of exfoliation at the bond interface between an insulating resin and a conductor metal and the problem of cracking of the resin.

As a countermeasure against the above-mentioned problems, a further filler addition has been adopted. An addition of an excess of filler, however, increases resin viscosity greatly, thereby lowering workability. Besides, such an addition tends to cause engulfing of air bubbles or the like, leading to easy generation of voids in the resin or cracking of the resin. In addition, a local electric field is largely increased inside such voids. As a result, an electric path called a tree would grow inside the insulating resin or between the insulating resin and the filler, thereby leading to dielectric breakdown.

Non-patent Document 1 contains a description related to enhancement of strength of a silica-epoxy nanocomposite resin having nanosilica added to epoxy resin. In the description, it is said that a network structure is formed when hydrophobic silica is used as the nanosilica.

Patent Document 1 discloses an insulating casting resin wherein polar fine elastomer particles or a liquid elastomer having a polar molecule and an inorganic compound with a large particle diameter are dispersed in a polar epoxy resin.

Patent Document 2 discloses an electrical insulation resin mixture which contains silicon dioxide having an average particle diameter of 0.5 to 5 µm, and hydrophobic silicon dioxide having an average particle diameter of primary particles of not more than 500 nm.

Patent Document 3 discloses an insulating casting resin composition which contains macro-particles including silica, alumina or mullite having a primary particle diameter of 1 to 100 µm, and nanoparticles having a primary particle diameter of 1 to 1,000 nm and having an affinity for a resin.

### Prior Art Documents

### Patent Documents

Patent Document 1: JP-2011-1424-A
Patent Document 2: JP-2009-99387-A
Patent Document 3: JP-2008-75069-A

### Non-patent Document

Non-patent Document 1: Sano et al.: "Development of Simulation Techniques for Strength of Nanocomposite Materials", A Collection of Papers for 2011 National Meeting of The Institute of Electrical Engineers of Japan, 2-072

### Summary of the Invention

### Problem to be Solved by the Invention

In general, a hydrophilic material and a hydrophobic material tend to show phase separation. Therefore, for example in the case of a resin composition that is a mixture obtained by addition of a hydrophobic group-modified filler to a resin having a hydrophilic group on its side chain, the low affinity between the filler and the resin results in that when the resultant force of the viscosity resistance and the buoyancy in the mixture is not more than the gravity acting on the fine particles of the filler, the filler starts precipitating gradually, so that phase separation is liable to occur. Consequently, the resin composition or a cured resin product formed by curing the resin composition is not enhanced in insulation properties or strength, in the regions where the concentration of the fine particles is low. Besides, in the case where materials having a low affinity for each other are uniformly dispersed by a strong stirring force, the viscosity is increased largely. Therefore, it is difficult to add such a material in a large amount. Consequently, it is difficult in this case to enhance low-thermal-expansion properties or mechanical properties of the resin composition or the cured resin composition formed by curing the resin composition.

Although the resin compositions described in Patent Documents 1 to 3 are for use in electrical insulation, they lack sufficient consideration of dispersibility of filler in the resin used as a matrix (base resin). These resin compositions, therefore, cannot be said to be ones that assuredly solve the phase separation problem.

It is an object of the present invention to enhance dispersibility of filler, to maintain uniform low-thermal-expansion properties and mechanical strength, to enhance insulation characteristics, particularly treeing resistivity characteristic, of resin compositions or cured resin products, and to enhance the reliability of high voltage apparatuses and power transmission and distribution apparatuses in which the resin compositions or the cured resin products are used.

### Means for Solving the Problem

According to the present invention, there is provided an electrical insulation resin composition containing: an insulating resin as a matrix; a large particle diameter filler; and a small particle diameter filler smaller in particle diameter than the large particle diameter filler, characterized in that the insulating resin and the large particle diameter filler have an affinity for each other, and the insulating filler and the small particle diameter filler have no affinity for each other.

### Effect of the Invention

According to the present invention, it is possible to restrain phase separation in a resin composition, and to enhance treeing resistivity characteristic without spoiling low-thermal-expansion properties and mechanical properties of the resin composition. By use of this resin composition, it is possible to enhance the reliability of high voltage apparatuses and power transmission and distribution apparatuses.

### Brief Description of the Drawings

FIG. 1A is a sectional SEM image showing a cured resin product of an Example of the present invention.
FIG. 1B is an SEM image showing in a magnified form a part of FIG. 1A.
FIG. 2 is a photograph showing a part of a cured resin product of a Comparative Example.
FIG. 3A is a schematic drawing illustrating the progress of treeing in a cured resin product of an Example.
FIG. 3B is a schematic drawing illustrating the progress of treeing in a cured resin product of a Comparative Example.
FIG. 4 is a schematic drawing showing the progress of treeing in a cured product of an Example.
FIG. 5 is a sectional view showing an example of application of an electrical insulation resin composition of an Example to an inverter circuit board.

### Modes for Carrying Out the Invention

The present invention relates to an electrical insulation resin composition which contains an insulating resin as a matrix, and two kinds of fillers dispersed in the insulating resins, the fillers being different in particle diameter.

The present invention is characterized in that the filler having a large particle diameter (large particle diameter filler), of the above-mentioned two kinds of fillers, and the insulating resin have an affinity for each other, whereas the filler having a small particle diameter (small particle diameter filler) and the insulating resin have no affinity for each other.

Now, the electrical insulation resin composition (also referred to simply as "resin composition") according to an embodiment of the present invention, a cured product of the same (cured resin product), methods of preparing them, and a high voltage apparatus and a power transmission and distribution apparatus using them will be described below.

The electrical insulation resin composition contains an insulating resin as a matrix, a large particle diameter filler, and a small particle diameter filler smaller in particle diameter than the large particle diameter filler. The large particle diameter filler and the small particle diameter filler are in a dispersed state in the insulating resin. The insulating resin and the large particle diameter filler have an affinity for each other, whereas the insulating resin and the small particle diameter have no affinity for each other.

Here, the large particle diameter filler acts to enhance low-thermal-expansion properties and mechanical properties (strength) and to restrain an increase in viscosity. In addition, the large particle diameter filler functions as a minute stirring member for uniformly dispersing the small particle diameter filler into the insulating resin at the time of kneading, and acts to restrict the arrangement of the small particle diameter filler and to promote aggregation of the small particle diameter filler.

Further, "to have an affinity" means that two members have low tendency toward individual separation and aggregation, after dispersion by kneading (stirring) of the two members. On the other hand, "to have no affinity" means that two members show high tendency toward individual separation and aggregation, after dispersion by kneading (stirring) of the two members. Herein, the property of "having no affinity" may sometimes be expressed in terms of a difference in solubility parameter.

In the electrical insulation resin composition, the small particle diameter filler is desirably forming network-formed aggregates. The "network-formed aggregate" refers to a dendrite structure in which the particles of the small particle diameter filler are present without aggregating with one another. The network-formed aggregates act to enhance the continuity of regions which obstruct the progress of treeing. Herein, a value obtained by averaging through integration the width of branches of the dendrite structure along the longitudinal direction may sometimes be used as the size of the network-formed aggregate.

In the electrical insulation resin composition, desirably, the insulating resin and the large particle diameter filler are hydrophilic.

In the electrical insulation resin composition, desirably, the large particle diameter filler has an average particle diameter in a dispersed state in the insulating resin of 1 to 500 µm, and is mixed in an amount of 100 to 567 parts by weight based on 100 parts by weight of the insulating resin.

In the electrical insulation resin composition, desirably, the small particle diameter filler has a minimum diameter in a dispersed state in the insulating resin of 1 to 1,000 nm on average, and is mixed in an amount of not more than 30 parts by weight based on 100 parts by weight of the insulating resin.

In the electrical insulation resin composition, desirably, the difference in solubility parameter between the insulating resin and the small particle diameter filler is not less than 1.0 (MPa)^{1/2}.

In the electrical insulation resin composition, desirably, the insulating resin is an epoxy resin.

In the electrical insulation resin composition, desirably, the large particle diameter filler is silica.

In the electrical insulation resin composition, desirably, the small particle diameter filler is hydrophobic silica or styrene butadiene rubber.

The cured resin product is formed by curing an electrical insulation resin composition.

The high voltage apparatus has a configuration in which a conductor portion is coated with an electrical insulation resin.

The power transmission and distribution apparatus has a configuration in which a conductor portion is coated with an electrical insulation resin composition.

The high voltage apparatus has a configuration in which a conductor portion is coated with a cured resin product.

The power transmission and distribution apparatus has a configuration in which a conductor portion is coated with a cured resin product.

A method of preparing the electrical insulation resin composition is characterized by mixing a large particle diameter filler and a small particle diameter filler into an insulating resin used as a matrix, and kneading the resulting mixture so as to disperse the fillers into the insulating resin. Here, the insulating resin and the large particle diameter filler have an affinity for each other, whereas the insulating resin and the small particle diameter filler have no affinity for each other.

A method of the cured resin product is characterized by mixing a large particle diameter filler and a small particle diameter filler into an insulating resin used as a matrix, and kneading the resultant mixture to disperse the fillers into the insulating resin, followed by deaeration and heating so as to cure the mixture or resin composition.

As the insulating resin, there can be applied resins based on thermosetting epoxy resin, resins based on phenolic resin, resins based on melamine resin, resins based on urea resin, resins based on unsaturated polyester resin, resins based on alkyd resin, resins based on urethane resin, resins based on silicone resin, resins based on thermoplastic polyethylene resin, resins based on polypropylene, resins based on polyvinyl chloride, resins based on polystyrene resin, resins based on polyvinyl acetate, resins based on acrylic resin, resins based on fluoro-resin, and resins based on elastomer resin, and modified resins and mixtures of the above-mentioned resins.

As the large particle diameter filler, there can be applied insulating oxides, nitrides, hydroxides, carbonates and silicates, and the like fillers, and mixtures of two or more selected from among these fillers. Examples of general-purpose fillers that fall under the just-mentioned fillers include silica, alumina, and glass fibers. These are available inexpensively. In particular, alumina is preferred especially in the case where enhancing thermal conductivity of resin is aimed at.

Besides, as the small particle diameter filler, there can be applied insulating oxides, nitrides, hydroxides, laminar silicates and polymeric compounds, and the like fillers, and mixtures of two or more selected from among these fillers.

The large particle diameter filler having the same polarity as the insulating resin is high in affinity for the insulating resin, and is therefore uniformly dispersed in the insulating resin. As a result, the coefficient of thermal expansion of the insulating resin is restrained from becoming higher, and mechanical properties of the resin are enhanced. In general, materials different in polarity tend to undergo phase separation. In the present invention, however, the addition of the large particle diameter filler causes an increase in resin viscosity; therefore, the small particle diameter filler is trapped between particles of the large particle diameter filler, so that the small particle diameter filler is dispersed in the insulating resin uniformly on a macroscopic basis.

Furthermore, in the case where the small particle diameter filler and the insulating resin are different in polarity, the small particle diameter filler forms network structures in which linear structures are in contact with one another, between the particles of the large particle diameter filler in the insulating resin. Such a network structure enhances insulation properties and mechanical properties of the insulating resin. As for treeing resistivity characteristic, especially, the network structure can stop the progress of treeing. As a result, the progress of treeing, which has been generated in the case of using a conventional resin, can be inhibited, and treeing resistivity characteristic can be enhanced greatly.

According to the prevent invention, therefore, treeing resistivity characteristic of an insulating resin can be enhanced more than before, while maintaining comparable or superior low-thermal-expansion properties and mechanical properties as compared with those attained by the related art.

Furthermore, in the present invention, desirably, the large particle diameter filler dispersed in the insulating resin has an average particle diameter of 1 to 500 µm, and is mixed in an amount of 100 to 567 parts by weight based on 100 parts by weight of the insulating resin.

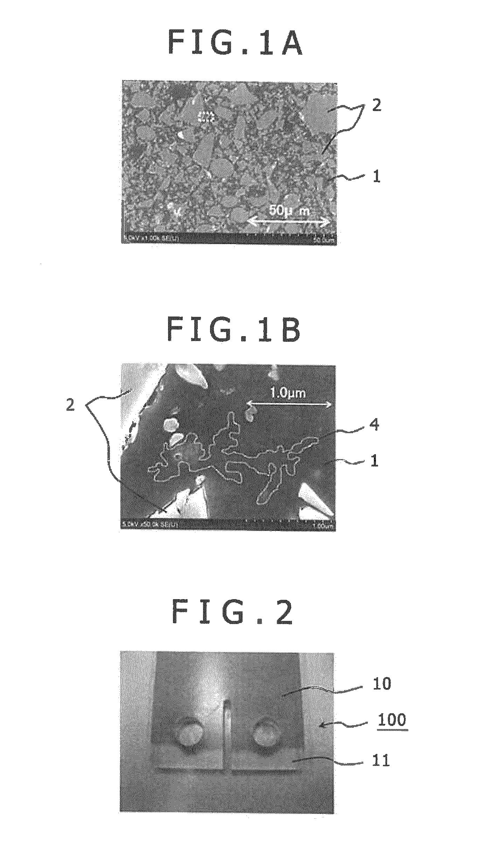

Here, the average particle diameter of the large particle diameter filler means the average of the respective diameters of particles of the large particle diameter filler in the dispersed state in the insulating resin. The average particle diameter is in regard of the particles denoted by symbol 2 in FIGS. 1A and 1B. The method for measurement of the particle diameter is not particularly restricted. In Examples of the present invention, the maximum particle diameter of a single particle in a fixed direction on an SEM image has been defined as the particle diameter of that particle, and an average of the particle diameters of a plurality of particles has been calculated.

For instance, in the case where the average particle diameter of the large particle diameter filler is 500 µm, the production cost of the filler can be reduced. The production cost tends to increase as the average particle diameter of the filler decreases. By broadening the particle size distribution, however, it is possible to realize a lowered viscosity in the case of heavy loading with the large particle diameter filler. A desirable particle size distribution in this case is 0.1 to 100 µm.

When the amount of the large particle diameter filler added is set to be not less than 100 parts by weight based on 100 parts by weight of the insulating resin, the coefficient of thermal expansion of the insulating resin is lowered, and mechanical strength of the resin is enhanced. Furthermore, in the case where the filler is less expensive than the insulating resin, an addition of the filler in a higher proportion can lead to a lowered material cost. On the contrary, when the filler is added in an amount of more than 567 parts by weight, the resin viscosity is increased largely, which leads to lowered workability and generation of voids inside the insulating resin. Consequently, mechanical strength and insulation properties are lowered. Accordingly, the addition amount is preferably from 100 to 567 parts by weight, for holding down the resin cost and also for maintaining comparable or superior mechanical properties and insulation properties as compared with those attainable according to the related art.

Furthermore, in the present invention, desirably, the small particle diameter filler dispersed in the insulating resin has an average particle diameter of 1 to 1,000 nm, and is mixed in an amount of not more than 30 parts by weight based on 100 parts by weight of the insulating resin.

In general, in the case where a filler on the nanometer order is dispersed in an insulating resin, the particles of the filler are liable to aggregate due to a high surface energy thereof. Meanwhile, depending on conditions, a plurality of linear structures may make contact with one another, to form a network structure. In view of this, the average particle diameter of the small particle diameter filler refers to the average of the particle diameters of primary particles, in the case where the small particle diameter filler is composed of primary particles. In the case where primary particles are not found clearly, for example, where dendrite network structures in which the particles are united together are observed, the average particle diameter of the small particle diameter filler refers to the minimum of the widths perpendicular to the longitudinal direction of branches of the dendrite network structure. The average particle diameter is in regard of the dendrite network structures denoted by symbol 4 in FIG. 1B. The method for measurement of the particle diameter is not specifically restricted. In Examples of the present invention, the integral mean of the widths perpendicular to the longitudinal direction on the SEM image has been calculated as the average particle diameter of the particles under consideration.

Table 1 shows the relationship between radius of particle and inter-particle distance as well as the relationship between radius of particle radius and specific surface area of particle, in a system (resin composition) in which uniform spherical particles are dispersed in a volume concentration of 2%. Here, the inter-particle distance refers to the distance between the sphere centers of two adjacent particles.

[Table 1]

**Table 1**

| Radius of particle [nm] | Inter-particle distance [nm] | Specific surface area of particle |
|---|---|---|
| 40,000 | 160,000 | 1 |
| 400 | 1,600 | 100 |
| 4 | 16 | 10,000 |

From this table it is seen that as the radius of particle decreases, the inter-particle distance decreases and the specific surface area increases. This fact shows that it is possible, by reducing the particle diameter of the filler, to broaden the interaction region (area) between the resin and the filler, thereby greatly enhancing the properties of the resin.

In the case where the minimum radius on average of the small particle diameter filler is not more than 1,000 nm, the interaction region between the resin and the filler and the interaction region between the particles of the filler are largely broadened, so that the region of reaction of the filler with the resin is enlarged and the properties of the resin are greatly changed, as compared with the case where the large particle diameter filler is added. On the other hand, when the minimum radius on average of the small particle diameter filler is reduced to below 1 nm, the surface energy increases, so that it becomes difficult for the filler particles to be dispersed into the resin uniformly, and the production cost of such a filler is increased greatly. Furthermore, in the case where the small particle diameter filler is added in an amount of at least 30 parts by weight based on 100 parts by weight of the insulating resin, the difference in polarity between the filler and the insulating resin leads to the problem of an increase in viscosity due to thixotrophic properties.

In the configuration according to the present invention, the large particle diameter filler is added jointly. An addition of an excess of the small particle diameter filler, therefore, brings about a further rise in viscosity, whereby mechanical properties and insulation properties are lowered in the same manner as aforementioned. Therefore, it is desirable to add the small particle diameter filler in an amount of not more than 30 parts by weight based on 100 parts by weight of the resin. Particularly in the case where the large particle diameter filler is added in a large amount, the addition amount of the small particle diameter filler is desirably not more than 10 parts by weight.

Furthermore, in the present invention, desirably, the difference in solubility parameter (SP value) between the insulating resin and the small particle diameter filler is not less than 1.0 (MPa)^{1/2}.

The SP value (Solubility Parameter) is a parameter indicative of ease of mixing between different materials, with a higher parameter value indicating easier mixing. In general, it is said that a higher SP value corresponds to higher polarity. In the present invention, it has been confirmed that when the difference in SP value reaches or exceeds 1.0 (MPa)^{1/2}, the difference in polarity between the insulating resin and the small particle diameter filler is enlarged, and the effect intended becomes conspicuous. Accordingly, it is desirable that the difference in SP value between the insulating resin and the small particle diameter filler is not less than 1.0 (MPa)^{1/2}.

Furthermore, in the present invention, it is desirable that the insulating resin and the large particle diameter filler are hydrophilic and the small particle diameter filler is hydrophobic, or that the insulating resin and the large particle diameter filler are hydrophobic and the small particle diameter filler is hydrophilic.

As the hydrophilic material, there can be applied those materials in which a polar hydroxyl group, amino group, sulfo group, carboxyl group or the like is possessed by a backbone chain or a side chain of the material's molecule. As the hydrophobic material, on the other hand, there can be applied those materials in which a methyl group, methoxy group, alkyl group, alkoxy group, phenyl group or the like is present in a backbone chain or a side chain of the material's molecule. In general, a material with high polarity shows hydrophilicity. On the other hand, a material with low polarity exhibits hydrophobicity. As a result, the insulating resin and the large particle diameter filler are the same in polarity, and the insulating resin and the small particle diameter filler are different in polarity, so that the same configuration as in the present invention is obtained and the effect of the present invention is obtained.

Furthermore, the aforementioned electrical insulation resin composition is applicable to high voltage apparatuses such as motors, inverters, etc. and power transmission and distribution apparatuses such as transformers, circuit breakers, etc.

Now, a method for measurement of treeing characteristic, which is one of insulation characteristics, will be described below.

### <Method for measurement of treeing characteristic>

A plurality of samples having an electrode needle fixed by a resin composition were fabricated. A bottom portion of each sample was coated with a conductive coating material, and the sample was adhered to a surface of a flat plate electrode. Thereafter, in a silicone oil, a voltage of 7.5 kVrms-50Hz was impressed between the needle and the flat plate electrode for 60,000 minutes. After 30,000 minutes from the start of this test (voltage application) and upon completion of the test, one to three samples were extracted, and served to measurement of the distance the treeing had progressed by use of an optical microscope.

The electrode needle (tree electrode) used is an electrode needle produced by Ogura Jewel Industry Co., Ltd., having a diameter of 1 mm, with a center angle of 30 degrees and a radius of curvature of 5 µm at the tip thereof. The gap from the tip portion of the needle electrode to the flat plate electrode was set to 3 mm.

Now, the present invention will be described below using Examples and Comparative Examples.

### [Example 1]

A mixture of a bisphenol A type epoxy resin as a hydrophilic insulating resin and an acid anhydride curing agent was preliminarily heated to 90°C. 100 parts by weight of this mixture was admixed with 257 parts by weight of a hydrophilic large particle diameter filler (crushed silica; average particle diameter: 100 µm) and 5 parts by weight of a particulate polymeric compound (a particulate styrene butadiene rubber (SBR) having a phenyl group on a side chain; primary particle diameter: not more than 100 nm) as a hydrophobic small particle diameter filler. Here, the particulate polymeric compound differs in SP value from the epoxy resin by 1.0 (MPa)^{1/2}. Besides, the above-mentioned mixture was admixed with a curing accelerator, if required. Then, the resultant mixture was kneaded while exerting a sufficient shearing force on the mixture, with the mixture being heat-insulated at 90°C.

Thereafter, the kneaded mixture was deaerated in a vacuum tank, and was cured by heating under a two-stage curing condition, specifically, heating at 100°C for 5 h (hours) and at 170°C for 7 h, to obtain a cured resin product.

### [Example 2]

A resin composition not containing a large particle diameter filler was prepared, and was served to measurement of treeing characteristic.

A mixture of a bisphenol A type epoxy resin as a hydrophilic insulating resin and an acid anhydride curing agent was preliminarily heated to 90°C. 100 parts by weight of this mixture was admixed with 3 parts by weight of a hydrophobic silica (average primary particle diameter: 12 nm) having its surfaces treated with dimethylpolysiloxane to be hydrophobic, which was used as a small particle diameter filler. Besides, this mixture was admixed with a curing accelerator, if necessary. Then, the resultant mixture was kneaded while exerting a sufficient shearing force on the mixture, with the mixture being heat-insulated at 90°C.

Thereafter, the kneaded mixture was deaerated in a vacuum tank, and was cured by heating under a two-stage curing condition, specifically, heating at 80°C for 5 h and at 130°C for 14 h, to obtain a cured resin product.

### (Comparative Example 1)

100 parts by weight of a mixture of a bisphenol A type epoxy resin and an acid anhydride curing agent, the mixture preliminarily heated to 90°C, was admixed with 5 parts by weight of a particulate polymeric compound (a particulate styrene butadiene rubber (SBR) having a phenyl group on its side chain; primary particle diameter: not more than 100 nm; being different in SP value from the epoxy resin by 1.0 (MPa)^{1/2}), which is the small particle diameter filler used in Example 1. Further, the mixture was admixed with a curing accelerator, if needed. The resultant mixture was kneaded while exerting a sufficient shearing force on the mixture, with the mixture being heat-insulated at 90°C. Thereafter, the kneaded mixture was deaerated in a vacuum tank, and was cured by heating under a two-stage curing condition, specifically, heating at 100°C for 5 h and at 170°C for 7 h, to obtain a cured resin product sample. This cured resin product sample was served to characteristics evaluation which will be described later.

### (Comparative Example 2)

100 parts by weight of a mixture of a bisphenol A type epoxy resin and an acid anhydride curing agent, the mixture preliminarily heated to 90°C, was admixed with 3 parts by weight of a non-surface-treated hydrophilic silica (average primary particle diameter: 12 nm) serving as a small particle diameter filler, and was further admixed with a curing accelerator, as required. The resultant mixture was kneaded while exerting a sufficient shearing force on the mixture, with the mixture being heat-insulated at 90°C. Thereafter, the kneaded mixture was deaerated in a vacuum tank, and was cured under a curing condition of two-stage heating, specifically, heating at 80°C for 5 h and at 130°C for 14 h, to obtain a cured resin product sample. This cured resin product sample was served to characteristics evaluation which will be described later.

### (Comparative Example 3)

100 parts by weight of a mixture of a bisphenol A type epoxy resin and an acid anhydride curing agent, the mixture preliminarily heated to 90°C, was admixed with a curing accelerator, if necessary. This mixture was kneaded while exerting a sufficient shearing force on the mixture, with the mixture being heat-insulated at 90°C. Thereafter, the kneaded mixture was deaerated in a vacuum tank, and was cured under a curing condition of two-stage heating, specifically, heating at 80°C for 5 h and at 130°C for 14h, to obtain a cured resin product sample. This cured resin product sample was served to characteristics evaluation which will be described later.

FIG. 1A is a sectional SEM image showing the cured resin product of Example 1.

In the cured resin product shown in this figure, the large particle diameter filler 2 is dispersed in the insulating resin 1. The particle diameter of the large particle diameter filler 2 is not more than 50 µm, mostly not more than 20 µm.

FIG. 1B is an SEM image showing, in a magnified form, a part (the region surrounded by broken line) of FIG. 1A.

In this figure, the small particle diameter filler is forming a network-formed aggregate 4. The network-formed aggregate 4 has an overall size of 1 to 2 µm. Its elongated branch-like portions have a width of about 0.1 µm and a length of about 0.1 to 0.5 µm. Fragments of the large particle diameter filler 2, which are about 0.1 µm in particle diameter, are also observed.

FIG. 2 is a photograph showing a part of the cured resin product of Comparative Example 1.

In this figure, the cured resin product 100 has the epoxy resin as a matrix, which is separated on a phase basis into an opaque part 10 where the concentration of the small particle diameter filler is high and a transparent part 11 where the concentration of the small particle diameter filler is low.

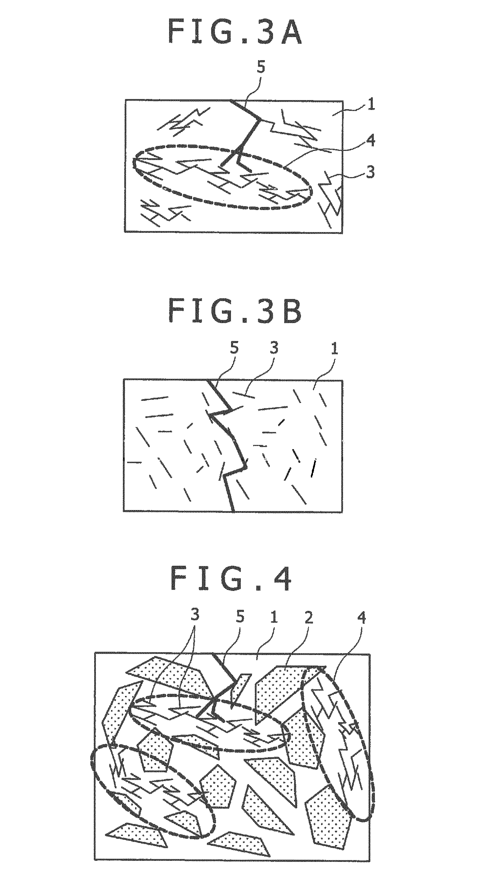

FIG. 3A is a schematic drawing which illustrates the progress of treeing in the cured resin product of Example 2.

In this figure, particles of the small particle diameter filler 3 dispersed in the insulating rein 1 have aggregated to form a network-formed aggregate 4 in the region surrounded by broken line. Although treeing 5 progresses while being obstructed by the small particle diameter filler 3, it stops progressing upon reaching the network-formed aggregate 4.

FIG. 3B is a schematic drawing which illustrates the progress of treeing in the cured resin product of Comparative Example 2.

In this figure, the small particle diameter filler 3 dispersed in the insulating resin 1 have not aggregated, so that treeing 5 progresses notwithstanding its being obstructed by the small particle diameter filler 3.

FIG. 4 is a schematic drawing which illustrates the progress of treeing in the cured resin product of the Example.

In this figure, the large particle diameter filler 2 and the small particle diameter filler 3 are dispersed in the insulating resin 1. Particles of the small particle diameter filler 3 are restricted by the large particle diameter filler 2 in regard of the range of movement, so that they are liable to aggregate. The regions surrounded by broken line depict network-formed aggregates 4 generated through aggregation. Treeing 5 is obstructed by the large particle diameter filler 2 and the small particle diameter filler 3, so that the distance in which the treeing 5 progresses will be short.

Tables 2 and 3 show measurement results of treeing characteristic.

In Table 2, the measurement results are set forth for samples extracted one each from the samples of Example 2, Comparative Example 2 and Comparative Example 3, after the lapse of 30,000 minutes.

In Table 3, measurement results are given for three samples extracted from the samples of Example 2, two samples extracted from the samples of Comparative Example 2, and two samples extracted from the samples of Comparative Example 3, after the lapse of 60,000 minutes.

[Table 2]

**Table 2**

| | Sample No. |
|---|---|
| | 1 |
| Example 2 | 0.00 |
| Comparative Example 2 | 0.21 |
| Comparative Example 3 | 1.00 |

[Table 3]

**Table 3**

| | Sample No. | | |
|---|---|---|---|
| | 1 | 2 | 3 |
| Example 2 | 0.33 | 0.00 | 0.00 |
| Comparative Example 2 | 0.94 | 1.14 | - |
| Comparative Example 3 | | 1.00 | |

The measurement results set forth in Tables 2 and 3 are the distance the treeing progressed, and are given in terms of value relative to the result of Comparative Example 3 (in Table 3, the result is an average of results for two samples). Here, in Example 2, Comparative Example 2 and Comparative Example 3, addition of the large particle diameter filler was omitted for accurate measurement of the distance of progress of the treeing.

In Example 2, however, as illustrated in a treeing progress model in FIG. 3A, it was confirmed under an optical microscope that even in the case of addition of only the small particle diameter filler, the small particle diameter filler was dispersed uniformly on a macroscopic basis, and the dispersed state of the small particle diameter filler was structures in which the small particle diameter filler was partially aggregated in a network form as shown in FIG. 1B. Therefore, it is considered that the effect obtained in Example 2 is an effect which is obtained also in a configuration wherein the large particle diameter filler is added. In addition, also in Comparative Example 3, it was confirmed under an optical microscope that the small particle diameter filler was dispersed uniformly.

Now, referring to these results, a specific advantageous effect of the present invention will be described below.

In the first place, the effect of the use of the large particle diameter filler and the small particle diameter filler according to the present invention will be described, referring to FIGS. 1A, 1B and 2.

From FIG. 1A it is confirmed that the large particle diameter filler 2 is uniformly dispersed in the insulating resin 1.

In general, the epoxy resin as the insulating resin 1 has hydrophilicity, that is, polarity. Besides, silica as the large particle diameter filler 2 also has hydrophilicity, that is, polarity, since it has a multiplicity of silanol groups on the surface of each particle thereof. Therefore, the epoxy resin and silica are miscible with each other, in general. Consequently, as shown in FIG. 1A, it is easy to uniformly disperse the large particle diameter filler 2 into the insulating resin 1.

Furthermore, from the magnified view shown in FIG. 1B, it is seen that the small particle diameter filler formed structures (network-formed aggregates 4) wherein it is partially aggregated in a network form between the particles of the large particle diameter filler.

On the other hand, in the cured resin product of Comparative Example 1 that has a composition obtained by removing the large particle diameter filler from the composition of Example 1, as shown in FIG. 2, the small particle diameter filler and the epoxy resin are separated from each other on a phase basis.

In the case where a filler differing in SP value from the epoxy resin by 1.0 (MPa)^{1/2}, like the small particle diameter filler adopted in Examples, there is a tendency toward phase separation due to the difference in polarity. On the contrary, it is seen that such a phase separation as shown in FIG. 2 can be restrained by the addition of the large particle diameter filler 2, as shown in FIG. 1B. This is an effect of trapping of the small particle diameter filler between the particles of the large particle diameter filler, as a result of an increase in resin viscosity, which, in turn, is caused by the addition of the large particle diameter filler 2.

Thus, the electrical insulation resin composition according to the present invention ensures that the small particle diameter filler can be dispersed uniformly on a macroscopic basis in a mixture containing the insulating resin and the large particle diameter filler which are different from the small particle diameter filler in polarity. As a result, even in a system wherein the small particle diameter filler different in polarity from the insulating resin is added, low-thermal-expansion properties and mechanical properties of the insulating resin can be maintained at or above those of resin compositions according to the related art.

Furthermore, from Tables 2 and 3, it is possible to explain the treeing resistivity-enhancing effect attained according to the present invention.

Specifically, it is seen from Table 2 that, in the case of Comparative Example 2 concerning a cured product of an epoxy resin composition in which only a small particle diameter filler having the same polarity as the epoxy resin is uniformly dispersed, it is possible to restrain the progress of treeing, as compared with the case of Comparative Example 3 concerning a cured product of an epoxy resin prepared without addition of any small particle diameter filler or any large particle diameter filler.

Further, it is seen from Table 3 that, in the case where a hydrophobic silica having undergone replacement of surface hydroxyl groups with silanol groups by use of dimethylpolysiloxane is added as a small particle diameter filler in Example 2, treeing is not generated, and the sample in this case is higher in treeing resistivity than any other sample.

Furthermore, it is seen from Table 3 that while Comparative Example 2 and Comparative Example 3 offered comparable treeing characteristics, Comparative Example 2 generated no treeing or a treeing with little progress.

A treeing progress-restraining mechanism attained by use of a needle electrode according to the present invention can be explained as follows.

In the case of the cured resin product of Comparative Example 2, as shown in FIG. 3B, hydrophilic silica particles do not aggregate but are kept dispersed minutely and uniformly, so that an electric treeing 5 emerging from the tip of the needle electrode progresses while branching.

By contrast, in the case of the cured resin product of Example 2, as shown in FIG. 3A, hydrophobic silica particles have partially aggregated in a network form, so that the insulating resin 1 itself is present as a more rigid resin, and treeing 5 is restrained from occurring or progressing. In addition, even if treeing 5 progresses, the progress of the treeing 5 is restrained upon arrival at the network-formed aggregate 4, since the network-formed aggregate 4 itself is high in deterioration resistance.

Furthermore, although treeing 5 tends to progress selectively through the insulating resin 1 (matrix) which is low in deterioration resistance, the necessity for the treeing 5 to largely bypass the network-formed aggregate promises a further delaying of the progress of the treeing 5.

This effect can be obtained even at a network-formed aggregate 4 present between the particles of the large particle diameter filler 2, as shown in Fig. 4.

Therefore, in the case where the large particle diameter filler 2 having the same polarity as the insulating resin and the small particle diameter filler 3 being different from the insulating resin 1 in polarity are simultaneously added to the insulating resin 1, the small particle diameter filler 3 forms the network-formed aggregates 4 between the particles of the large particle diameter filler 2. Consequently, the progress of treeing 5 can be restrained. Accordingly, the cured resin product obtained from the resin composition of the present invention can show enhanced treeing resistivity while maintaining low-thermal-expansion properties and mechanical strength.

### [Example 3]

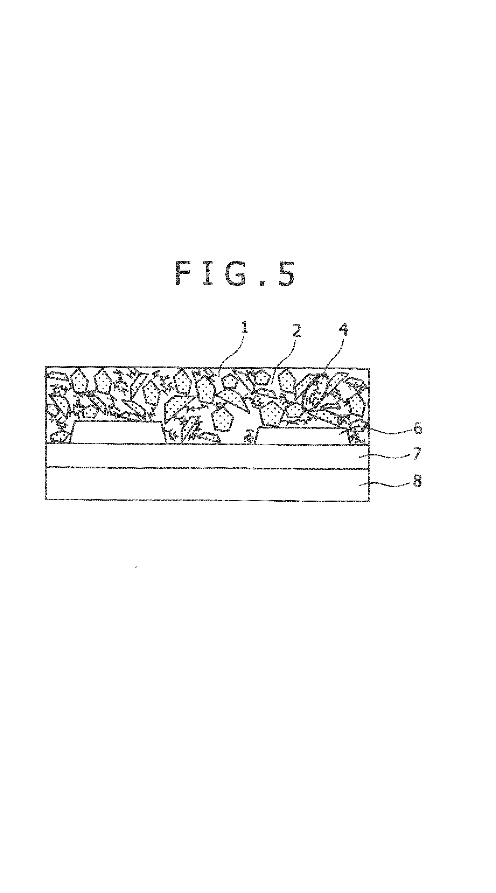

FIG. 5 illustrates an example of application of the electrical insulation resin of Example 1 to sealing of an inverter circuit board.

The circuit board illustrated in this figure is obtained by a method in which a substrate 8 provided with an insulation layer 7 and a wiring pattern 6 is molded by use of a resin composition containing an insulating resin 1, a large particle diameter filler 2, and network-formed aggregates 4 of a small particle diameter filler. The wiring pattern 6 (conductor pattern) is provided over a surface of the substrate 8, with the sheet-shaped insulation layer 7 interposed therebetween. In addition, for prevention of short-circuiting, the wiring pattern 6 is sealed by an insulating cured resin product (insulating material) formed by applying and curing the resin composition according to the present invention.

In the structure illustrated in this figure, since the coefficient of thermal expansion of the insulating resin 1 is held down by the addition of the large particle diameter filler 2, it is possible to restrain exfoliation between the wiring pattern 6 and the cured resin product as well as cracking of the resin.

In addition, at an end portion of the wiring pattern 6, especially at an acute angular portion thereof, an electric field is increased locally, so that electric discharge is liable to occur. Further, for example, in a site where an end portion of the wiring pattern 6 makes contact with the insulating layer 7, there is a densely rugged structure, such that a void or the like is liable to be generated there. As a result, the electric field is increased locally, and electric discharge is liable to occur there.

In such a structure, electric discharge causes electric treeing, so that driving of the circuit board for a long time is liable to result in dielectric breakdown. When the electrical insulation resin composition of the present invention is applied, however, treeing characteristic can be enhanced and, hence, dielectric breakdown can be prevented. Therefore, the electrical insulation resin composition of the present invention is applicable even to sealing of insulated circuit boards miniaturized more than those according to the related art, and is able to enhance the reliability of apparatuses more than before.

### Description of Reference Numerals

1: Insulating resin
2: Large particle diameter filler
3: Small particle diameter filler
4: Network-formed aggregate
5: treeing
6: Wiring pattern
7: Insulation layer
8: Substrate

## Claims

1. An electrical insulation resin composition containing:
an insulating resin as a matrix;
a large particle diameter filler; and
a small particle diameter filler smaller in particle diameter than the large particle diameter filler, wherein
the large particle diameter filler and the small particle diameter filler are in a dispersed state in the insulating resin,
the insulating resin and the large particle diameter filler have an affinity for each other, and
the insulating resin and the small particle diameter filler have no affinity for each other.

2. The electrical insulation resin composition according to claim 1, wherein the small particle diameter filler is forming a network-formed aggregate.

3. The electrical insulation resin composition according to claim 1 or 2, wherein the insulating resin and the large particle diameter filler are hydrophilic.

4. The electrical insulation resin composition according to any one of claims 1 to 3, wherein the large particle diameter filler has an average particle diameter in a dispersed state in the insulating resin of 1 to 500 µm, and is mixed in an amount of 100 to 567 parts by weight based on 100 parts by weight of the insulating resin.

5. The electrical insulation resin composition according to any one of claims 1 to 4, wherein the small particle diameter filler has an average particle diameter in a dispersed state in the insulating resin of 1 to 1,000 nm, and is mixed in an amount of not more than 30 parts by weight based on 100 parts by weight of the insulating resin.

6. The electrical insulation resin composition according to any one of claims 1 to 5, wherein the difference in solubility parameter between the insulating resin and the small particle diameter filler is not less than 1.0 (MPa)^{1/2}.

7. The electrical insulation resin composition according to any one of claims 1 to 6, wherein the insulating resin is an epoxy resin.

8. The electrical insulation resin composition according to claim 7,
wherein the large particle diameter filler is silica.

9. The electrical insulation resin composition according to claim 7 or 8,
wherein the small particle diameter filler is hydrophobic silica or styrene butadiene rubber.

10. A cured resin product formed by curing the electrical insulation resin composition according to any one of claims 1 to 9.

11. A high voltage apparatus having a configuration in which a conductor portion is coated with the electrical insulation resin composition according to any one of claims 1 to 9.

12. A power transmission and distribution apparatus having a configuration in which a conductor portion is coated with the electrical insulation resin composition according to any one of claims 1 to 9.

13. A high voltage apparatus having a configuration in which a conductor portion is coated with the cured resin product according to claim 10.

14. A power transmission and distribution apparatus having a configuration in which a conductor portion is coated with the cured resin product according to claim 10.

15. A method of preparing an electrical insulation resin composition containing:
an insulating resin as a matrix;
a large particle diameter filler; and
a small particle diameter filler smaller in particle diameter than the large particle diameter filler,
the insulating resin and the large particle diameter filler having an affinity for each other, and
the insulating resin and the small particle diameter filler having no affinity for each other,
the method comprising:
mixing the large particle diameter filler and the small particle diameter filler into the insulating resin; and
kneading the resulting mixture so as to disperse the fillers into the insulating resin.

16. A method of preparing a cured resin product formed by curing an electrical insulation resin composition, the electrical insulating resin composition containing:
an insulating resin as a matrix;
a large particle diameter filler; and
a small particle diameter filler smaller in particle diameter than the large particle diameter filler,
the insulating resin and the large particle diameter filler having an affinity for each other, and
the insulating resin and the small particle diameter filler having no affinity for each other,
the method comprising:
mixing the large particle diameter filler and the small particle diameter filler into the insulating resin;
kneading the mixed resin composition so as to disperse the fillers into the insulating resin;
deaerating the kneaded resin composition; and
heating the deaerated resin composition so as cure the resin composition.

## Amended claims

### Amended claims under Art. 19.1 PCT

**1.** (As amended)
An electrical insulation resin composition containing:
an insulating resin as a matrix;
a large particle diameter filler; and
a small particle diameter filler smaller in particle diameter than the large particle diameter filler, wherein
the large particle diameter filler and the small particle diameter filler are in a dispersed state in the insulating resin,
the insulating resin and the large particle diameter filler have an affinity for each other,
the insulating resin and the small particle diameter filler have no affinity for each other, and
the small particle diameter filler is forming a network-formed aggregate.

**2.** (Deleted)

**3.** The electrical insulation resin composition according to claim 1 or 2, wherein the insulating resin and the large particle diameter filler are hydrophilic.

**4.** The electrical insulation resin composition according to any one of claims 1 to 3, wherein the large particle diameter filler has an average particle diameter in a dispersed state in the insulating resin of 1 to 500 µm, and is mixed in an amount of 100 to 567 parts by weight based on 100 parts by weight of the insulating resin.

**5.** The electrical insulation resin composition according to any one of claims 1 to 4, wherein the small particle diameter filler has an average particle diameter in a dispersed state in the insulating resin of 1 to 1,000 nm, and is mixed in an amount of not more than 30 parts by weight based on 100 parts by weight of the insulating resin.

**6.** The electrical insulation resin composition according to any one of claims 1 to 5, wherein the difference in solubility parameter between the insulating resin and the small particle diameter filler is not less than 1.0 (MPa)^{1/2}.

**7.** The electrical insulation resin composition according to any one of claims 1 to 6, wherein the insulating resin is an epoxy resin.

**8.** The electrical insulation resin composition according to claim 7,
wherein the large particle diameter filler is silica.

**9.** The electrical insulation resin composition according to claim 7 or 8,
wherein the small particle diameter filler is hydrophobic silica or styrene butadiene rubber.

**10.** A cured resin product formed by curing the electrical insulation resin composition according to any one of claims 1 to 9.

**11.** A high voltage apparatus having a configuration in which a conductor portion is coated with the electrical insulation resin composition according to any one of claims 1 to 9.

**12.** A power transmission and distribution apparatus having a configuration in which a conductor portion is coated with the electrical insulation resin composition according to any one of claims 1 to 9.

**13.** A high voltage apparatus having a configuration in which a conductor portion is coated with the cured resin product according to claim 10.

**14.** A power transmission and distribution apparatus having a configuration in which a conductor portion is coated with the cured resin product according to claim 10.

**15.** A method of preparing an electrical insulation resin composition containing:
an insulating resin as a matrix;
a large particle diameter filler; and
a small particle diameter filler smaller in particle diameter than the large particle diameter filler,
the insulating resin and the large particle diameter filler having an affinity for each other, and
the insulating resin and the small particle diameter filler having no affinity for each other,
the method comprising:
mixing the large particle diameter filler and the small particle diameter filler into the insulating resin; and
kneading the resulting mixture so as to disperse the fillers into the insulating resin.

**16.** A method of preparing a cured resin product formed by curing an electrical insulation resin composition, the electrical insulating resin composition containing:
an insulating resin as a matrix;
a large particle diameter filler; and
a small particle diameter filler smaller in particle diameter than the large particle diameter filler,
the insulating resin and the large particle diameter filler having an affinity for each other, and
the insulating resin and the small particle diameter filler having no affinity for each other,
the method comprising:
mixing the large particle diameter filler and the small particle diameter filler into the insulating resin;
kneading the mixed resin composition so as to disperse the fillers into the insulating resin;
deaerating the kneaded resin composition; and
heating the deaerated resin composition so as cure the resin composition.

Statement under Art. 19.1 PCT

1. All the structures of Claim 2 have been added to Claim 1.
   2. Claim 2 has been deleted.
